# EUROPÄISCHE PATENTSCHRIFT

(11) **EP 4 035 557 B1**
(45) Veröffentlichungstag und Bekanntmachung des Hinweises auf die Patenterteilung: **10.01.2024**
(21) Anmeldenummer: 21154375.6
(22) Anmeldetag: 29.01.2021
(51) Int. Cl.: A45C 5/14, A45C 5/00, G02B 5/00, A45C 13/08

(54) **GEPÄCKSTÜCK**
PIECE OF LUGGAGE
BAGAGE

(43) Veröffentlichungstag der Anmeldung: 03.08.2022
(73) Patentinhaber: RIMOWA GmbH, 50829 Köln (DE)
(72) Erfinder:
(74) Vertreter: dompatent von Kreisler Selting Werner - Partnerschaft von Patent- und Rechtsanwälten mbB

(56) Entgegenhaltungen:
- CN-U- 207 186 209
- CN-U- 210 184 763
- DE-U1-202016 100 595
- JP-U- S51 155 202

## Beschreibung

Die Erfindung betrifft ein Gepäckstück nach Anspruch 1.

Es sind Gepäckstücke, insbesondere Koffer, bekannt, die zumindest sechs Seitenwände aufweisen, wobei die Seitenwände jeweils zumindest eine Außenfläche und eine Innenfläche aufweisen, wobei die Außen- und die Innenfläche im Wesentlichen parallel zueinander verlaufen. JP S51 155202 U offenbart ein Gepäckstück, insbesondere Koffer, mit zumindest sechs Seitenwänden, wobei die Seitenwände jeweils zumindest eine Außenfläche und eine Innenfläche aufweisen, wobei die Außen-und die Innenfläche im Wesentlichen parallel zueinander verlaufen.

Bei bekannten Vorrichtungen besteht häufig das Problem, dass die Gepäckstücke insbesondere bei Flugreisen zum Beispiel auf dem Gepäcksband nur schwer wieder erkennbar sind. Daher besteht zunehmend Bedarf, die Gepäckstücke kenntlich zu machen bzw. zu individualisieren. Dies geschieht häufig mit Gepäcksgurten in verschiedenen Farben, die um den Koffer gelegt werden.

Die Aufgabe der vorliegenden Erfindung ist es daher ein Gepäckstück zu schaffen, das schon von Weitem leicht sichtbar ist.

Zur Lösung dieser Aufgabe dienen die Merkmale des Anspruchs 1.

Die Erfindung sieht in vorteilhafter Weise vor, dass an zumindest einer der Seitenwände an der zugehörigen Außenfläche zumindest eine Erhöhung vorgesehen ist, die zumindest eine Austrittsgrenzfläche aufweisen, die nicht parallel zu der Außenfläche der jeweiligen Seitenwand verläuft, und dass zumindest die Seitenwand, die die zumindest eine Erhöhung aufweist, aus einem Kunststoffmaterial besteht, das ein Fluoreszenzmaterial enthält und derart lichtleitend und lichtdurchlässig ist, dass Licht in die jeweilige Seitenwand einleitbar und weiterleitbar ist und an der jeweiligen zumindest einen Austrittsgrenzfläche wieder austretbar ist, wobei in der Seitenwand eine Umwandlung von unsichtbarem UV-Licht in sichtbares Licht erfolgt
Die vorliegende Erfindung hat den Vorteil, dass das Gepäckstück, insbesondere der Koffer, an der zumindest einen Erhöhung leuchtet. Ein Teil des aus der Umgebung einfallenden Lichtes wird von dem Fluoreszenzmaterial absorbiert und als langerwellige Fluoreszenzstrahlung in alle Raumrichtungen emittiert. Derjenige Teil des Lichtes, der an der Außenfläche der jeweiligen Seitenwand, die die Grenzfläche zwischen der Seitenwand und der Umgebungsluft darstellt, unter einem Winkel auftrifft, der über dem Grenzwinkel der Totalreflexion liegt, wird total reflektiert, und bleibt damit in der entsprechenden Seitenwand. Das Licht wird sozusagen gesammelt.

Da die zumindest eine Erhöhung auf der entsprechenden Außenfläche eine Austrittsgrenzfläche aufweist, die nicht parallel zu der Außenfläche der jeweiligen Seitenwand verläuft, trifft das Licht an dieser Stelle in einem anderen Winkel auf die Austrittsgrenzfläche auf als auf die Außenfläche. Dadurch trifft das Licht in einem Winkel auf die Austrittsgrenzfläche, der kleiner ist als der Grenzwinkel der Totalreflexion. Dies bewirkt, dass das Licht an der jeweiligen Erhöhung aus der Seitenwand austritt. Das bis dahin gesammelte Licht verlässt die Außenwand an den Erhöhungen. Dadurch ist die jeweilige Erhöhung stets heller als ihre Umgebung. Auf diese Weise wird ein Gepäckstück geschaffen, das von Weitem sichtbar ist. Insbesondere auf einem Gepäcksband ist das Gepäckstück von Weitem gut zu erkennen
Das Fluoreszenzmaterial kann auch als Fluoreszenzfarbstoff bezeichnet werden.

Die Austrittsgrenzfläche der Erhöhung kann eine Oberflächenrauigkeit aufweisen, die höher ist als die Oberflächenrauigkeit der Außenfläche, an der der die Erhöhung angeordnet ist. Dadurch kann die Auskopplung des Lichts an Erhöhung noch verbessert werden.

Die Austrittgrenzfläche kann bezogen auf die Außenfläche einen Winkel zwischen 80 und 170° aufweisen.

Die zumindest eine Erhöhung kann eine rippenförmige Erhöhung sein.

Die rippenförmige Erhöhung kann einen runden, einen dreieckigen oder einen viereckigen Querschnitt aufweisen.

Mehrere ein Muster bildende Erhöhungen können an der Außenfläche der zumindest einen Seitenwand nebeneinander angeordnet sein.

Mindestens zwei, vorzugsweise alle Seitenwände können zumindest an der zugehörigen Außenfläche zumindest eine Erhöhung aufweisen, die jeweils zumindest eine Austrittsgrenzfläche aufweist, die nicht parallel zu der Außenfläche der jeweiligen Seitenwand verläuft, und dass zumindest die Seitenwand, die jeweils die zumindest eine Erhöhung aufweist, aus einem Kunststoffmaterial besteht, das ein Fluoreszenzmaterial enthält und derart lichtleitend und lichtdurchlässig ist, das Licht in die Seitenwände einleitbar und weiterleitbar ist und an der jeweiligen Austrittgrenzfläche wieder austretbar ist, wobei in der jeweiligen Seitenwand eine Umwandlung von unsichtbarem UV-Licht in sichtbares Licht erfolgt
Das Fluoreszenzmaterial kann ein Fluoreszenzfarbstoff sein. Das Fluoreszenzmaterial kann zu 0,3 -5 %, vorzugsweise zu 0,5-1,5% in dem Kunststoffmaterial enthalten sein.

Das Fluoreszenzmaterial kann aus der Gruppe der Naphthalimide und Thioindigo sein kann.

Die Seitenwände können jeweils eine Dicke zwischen 0,4 - 10 mm, vorzugsweise 0,8-1,8 mm aufweisen. Die Dicke wird dabei bestimmt durch den Abstand zwischen Innenfläche und Außenfläche.

Als Kunststoffmaterial kann jegliches Polymer, insbesondere transparentes Polymer und/oder eine Mischung verschiedener Polymere und/oder recyceltes Polymer verwendet werden. Besonders bevorzugt kann Polycarbonat, vorzugsweise transparentes Polycarbonat verwendet werden.

Im Folgenden wird unter Bezugnahme auf die Zeichnungen Ausführungsbeispiele der vorliegenden Erfindung näher erläutert.

Es zeigen schematisch:
- Fig. 1: ein Gepäckstück,
- Fig. 2: ein Querschnitt einer Seitenwand des Gepäckstücks.,
- Fig. 3: ein Querschnitt einer Seitenwand mit dargestelltem Winkel zwischen Austrittsgrenzfläche und Außenfläche,
- Fig. 4: ein Querschnitt einer Seitenwand des Gepäckstücks mit alternativen Erhöhungen.

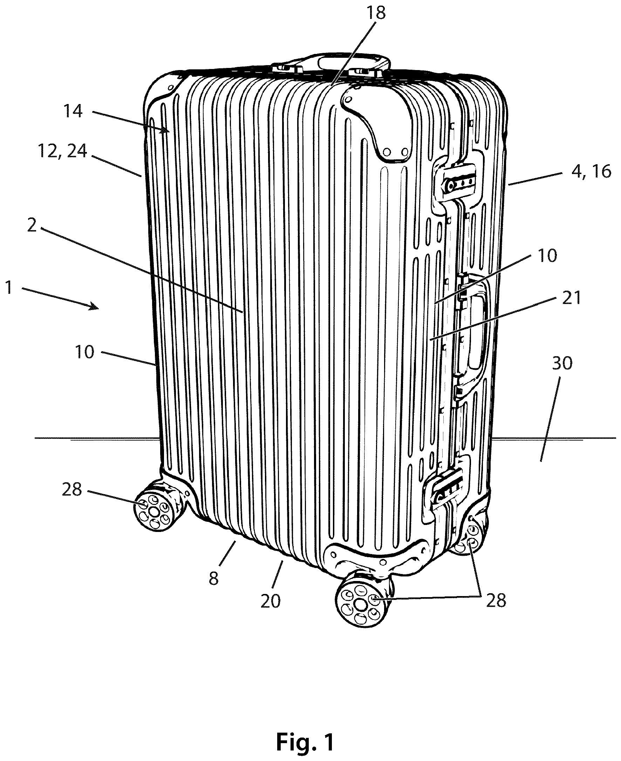

Fig.1 zeigt ein Gepäckstück 1 gemäß der vorliegenden Erfindung. Das Gepäckstück kann, wie dargestellt, ein Koffer sein. Das Gepäckstück 1 weist sechs Seitenwände 2, 4, 6, 8, 10, 12 auf. Die Seitenwände 2, 4, 6, 8, 10, 12 können jeweils zumindest eine Außenfläche 14, 16, 18, 20, 22, 24 und jeweils eine nicht dargestellte Innenfläche aufweisen, wobei jeweils die Außen- und die Innenfläche im Wesentlichen parallel zueinander verlaufen.

Eine Seitenfläche 8 ist an der Unterseite des Gepäckstücks angeordnet. An der die Unterseite bildende Seitenflächen 8 können Gepäckstückrollen 28 angeordnet sein, wobei im vorliegenden Fall das Gepäckstück 1 vier Gepäckstückrollen 28 aufweist. Es können jedoch auch weniger oder mehr Gepäckstückrollen vorgesehen sein. Das Gepäckstück 1 kann mit Hilfe der Gepäckstückrollen 28 über einer Bodenoberfläche 30 gerollt werden.

Zumindest eine der Seitenwände 2, 4, 6, 8, 10, 12 weist an der jeweiligen Außenfläche zumindest eine Erhöhung 26 auf. Im dargestellten Ausführungsbeispiel weist jede Seitenfläche zumindest eine Erhöhung 26 auf. Es können auch, wie im dargestellten Ausführungsbeispiel gezeigt, eine Vielzahl von nebeneinander angeordneten Erhöhungen 26 auf der jeweiligen Außenfläche vorgesehen sein. Die mehreren gleichmäßig voneinander beabstandeten Erhöhungen bilden auf diese Weise ein Muster.

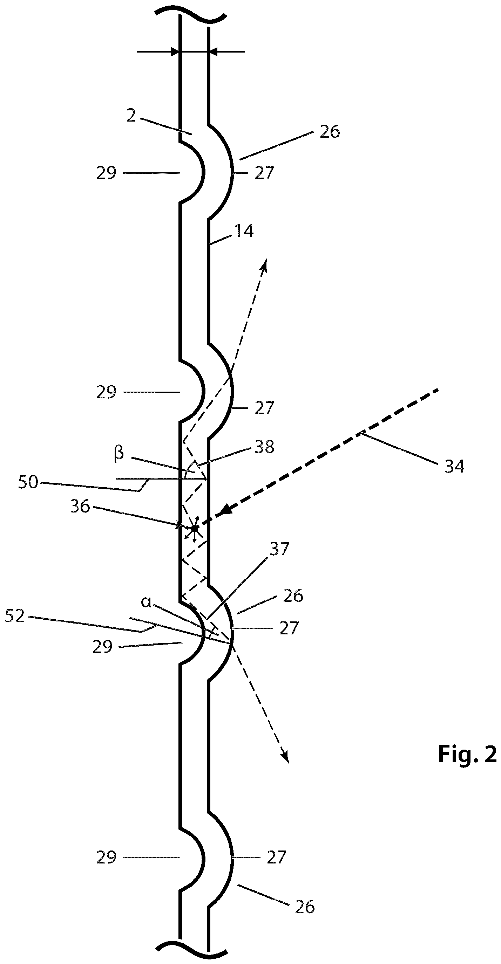

In Fig. 2 ist ein Teil eines Querschnitts der Seitenwand 2 dargestellt. Grundsätzlich ist der Aufbau der Seitenflächen, die zumindest eine Erhöhung aufweisen, ähnlich. Die Seitenwand 2 weist eine Außenfläche 14 und eine Innenfläche 25 auf. Die Seitenwand 2 weist zumindest eine Erhöhung 26 auf. Im dargestellten Ausführungsbeispiel sind mehrere Erhöhungen 26 vorgesehen. Die Erhöhungen 26 sind gegenüber der Außenfläche 14 in einer Richtung nach außen erhöht. Die zumindest eine Erhöhung 26 weist jeweils zumindest eine Austrittsgrenzfläche 27 auf.

Die Austrittsgrenzfläche 27 ist derart angeordnet, dass diese zumindest teilweise nicht parallel zur Außenfläche 14 ist. Der Querschnitt der Erhöhung 26 weist eine runde Form auf. Deswegen weist die Austrittsgrenzfläche 27 nicht einen definierten Winkel bezüglich der Außenfläche 14 auf, sondern weist an verschiedenen Stellen unterschiedliche Winkel bezögen auf die Außenfläche 14 auf. Die Erhöhung kann auch einen dreieckigen oder einen viereckigen oder einen beliebigen anders geformten Querschnitt aufweisen.

Im Bereich der Erhöhung ist im dargestellten Ausführungsbeispiel an der Innenfläche eine gegenüber der Innenfläche vorgesehen Vertiefung angeordnet. Alternativ könnte die Innenfläche auch durchgehend sein und keine Vertiefung aufweisen. Die Dicke d der Seitenwand, die dem Abstand zwischen Außenfläche und Innenfläche entspricht, beträgt 0,3-10 mm, vorzugsweise 0,8-1,8 mm.

Die Seitenwand 2 oder die Seitenwände, die die zumindest eine Erhöhung 26 aufweist bzw. aufweisen, bestehen aus einem Kunststoffmaterial, das ein Fluoreszenzmaterial enthält und derart lichtleitend und lichtdurchlässig ist, dass Licht in die jeweilige Seitenwand einleitbar und weiterleitbar ist und an der jeweiligen zumindest einen Austrittsgrenzfläche wieder austretbar ist, wobei in der Seitenwand eine Umwandlung von unsichtbarem UV-Licht in sichtbares Licht erfolgt.

Dies kann anhand der Fig. 2 näher erläutert werden. Das erfindungsgemäße Gepäckstück, insbesondere der Koffer, hat den Vorteil, dass die zumindest einen Erhöhung 26 leuchtet. In Fig. 2 ist dargestellt, wie ein Teil des aus der Umgebung einfallenden Lichtes 34 von dem Fluoreszenzmaterial absorbiert und als langerwellige Fluoreszenzstrahlung 36 in alle Raumrichtungen emittiert wird. Wie Fig.2 zu entnehmen ist, wird derjenige Teil 38 der Fluoreszenzstrahlung, der an der Außenfläche 14 der jeweiligen Seitenwand unter einem Winkel β auftrifft, der über dem Grenzwinkel der Totalreflexion liegt, total reflektiert, und bleibt damit in der entsprechenden Seitenwand 2. Das Licht wird sozusagen gesammelt. Die Außenfläche 14 bildet die Grenzfläche zwischen der Seitenwand 2 und der Umgebungsluft. Der Winkel β ist der Winkel zwischen dem Teil 38 der Fluoreszenzstrahlung und dem Lot 50 an dieser Stelle.

Da die zumindest eine Erhöhung 26 eine Austrittsgrenzfläche 27 aufweist, die zumindest teilweise nicht parallel zu der Außenfläche 14 der jeweiligen Seitenwand 2 verläuft, trifft der Teil 37 der Fluoreszenzstrahlung an dieser Stelle in einem anderen Winkel α auf die Austrittsgrenzfläche 27 auf als auf die Außenfläche 14. Dadurch trifft die Lichtstrahlung in einem Winkel α auf die Austrittsgrenzfläche 27, der kleiner ist als der Grenzwinkel der Totalreflexion. Dies bewirkt, dass die Lichtstrahlung an der jeweiligen Erhöhung 26 aus der Seitenwand 2 austritt. Das bis dahin gesammelte Licht verlässt die Seitenwand 2 an den Erhöhungen 26. Dadurch ist die jeweilige Erhöhung 26 stets heller als ihre Umgebung. Auf diese Weise wird ein Gepäckstück geschaffen, das von Weitem sichtbar ist. Insbesondere auf einem Gepäcksband ist das Gepäckstück von Weitem gut zu erkennen. Der Winkel α ist der Winkel zwischen dem Teil 37 der Fluoreszenzstrahlung und dem Lot 52 an dieser Stelle.

Die Austrittsgrenzfläche 27 der Erhöhung 26 kann eine Oberflächenrauigkeit aufweisen, die höher ist als die Oberflächenrauigkeit der Außenfläche 14, an der die Erhöhung 26 angeordnet ist. Dadurch kann die Auskopplung des Lichts an der Erhöhung noch verbessert werden.

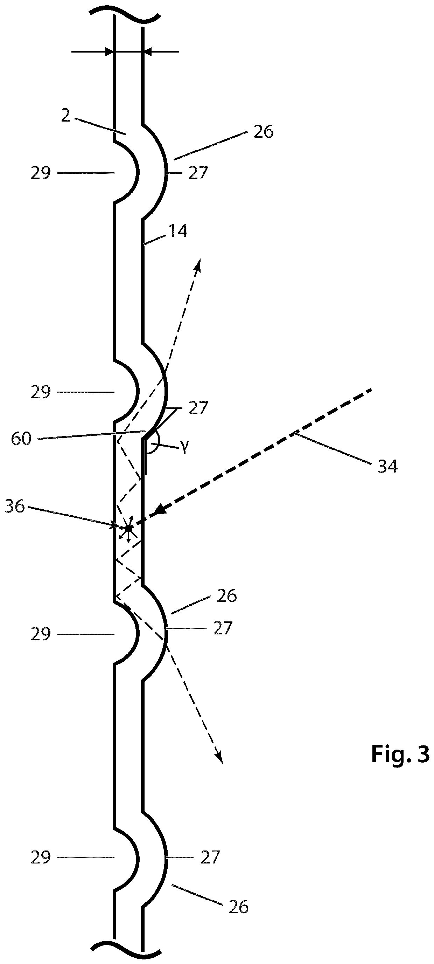

Zumindest Teile der Austrittgrenzfläche 27 können bezogen auf die Außenfläche einen Winkel γ zwischen 80 und 170° aufweisen. In Fig. 3 ist beispielsweise der Winkel γ dargestellt, der der markierte Bereich 50 der Austrittsgrenzfläche 27 bezogen auf die Außenfläche 14 aufweist.

Die dargestellten Erhöhungen sind rippenförmige Erhöhungen. Diese könnten jedoch auch eine andere Form aufweisen. Die Erhöhung, insbesondere die rippenförmige Erhöhung kann einen runden, einen dreieckigen oder einen viereckigen Querschnitt aufweisen.

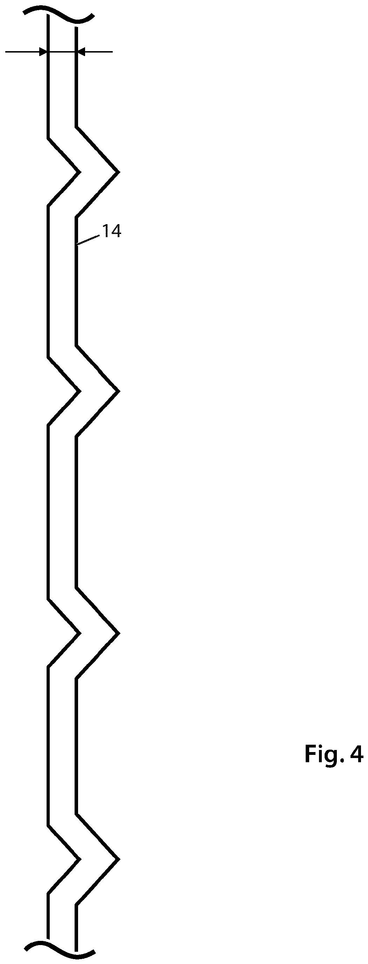

In Fig. 4 sind alternative Querschnittsformen der Erhöhungen dargestellt.

## Patentansprüche

1. Gepäckstück, insbesondere Koffer, mit
zumindest sechs Seitenwänden, wobei die Seitenwände jeweils zumindest eine Außenfläche und eine Innenfläche aufweisen, wobei die Außen-und die Innenfläche im Wesentlichen parallel zueinander verlaufen,
**dadurch gekennzeichnet,**
**dass** an zumindest einer der Seitenwände an der zugehörigen Außenfläche zumindest eine Erhöhung vorgesehen, die zumindest eine Austrittsfläche aufweisen, die zumindest teilweise nicht parallel zu der Außenfläche der jeweiligen Seitenwand verläuft, und dass zumindest die Seitenwand, die die zumindest eine Erhöhung aufweist, aus einem Kunststoffmaterial besteht, das ein Fluoreszenzmaterial enthält und derart lichtleitend und lichtdurchlässig ist, dass Licht in die jeweilige Seitenwand einleitbar und weiterleitbar ist und an der jeweiligen zumindest einen Austrittfläche wieder austretbar ist, wobei in der jeweiligen Seitenwand eine Umwandlung von unsichtbarem UV-Licht in sichtbares Licht erfolgt.

2. Gepäckstück nach Anspruch 1, **dadurch gekennzeichnet, dass** die Austrittfläche der Erhöhung eine Oberflächenrauigkeit aufweist, die höher ist als die Oberflächenrauigkeit der Außenfläche, an der der die Erhöhung angeordnet ist.

3. Gepäckstück nach Anspruch 1 oder 2, **dadurch gekennzeichnet, dass** zumindest ein Teil der Austrittgrenzfläche bezogen auf die Außenfläche einen Winkel zwischen 80 und 170° aufweist.

4. Gepäckstück nach einem der Ansprüche 1 bis 3, **dadurch gekennzeichnet, dass** die zumindest eine Erhöhung eine rippenförmige Erhöhung ist.

5. Gepäckstück nach Anspruch 4, **dadurch gekennzeichnet, dass** die Erhöhung, insbesondere die rippenförmige Erhöhung einen runden, einen dreieckigen oder einen viereckigen Querschnitt aufweist.

6. Gepäckstück nach einem der Ansprüche 1 bis 5, **dadurch gekennzeichnet, dass** mehrere ein Muster bildende Erhöhungen an der Außenfläche der zumindest einen Seitenwand nebeneinander angeordnet sind.

7. Gepäckstück nach einem der Ansprüche 1 bis 6, **dadurch gekennzeichnet, dass** mindestens zwei, vorzugsweise alle Seitenwände zumindest an der zugehörigen Außenfläche zumindest eine Erhöhung aufweisen, die jeweils zumindest eine Austrittsgrenzfläche aufweist, die zumindest teilweise nicht parallel zu der Außenfläche der jeweiligen Seitenwand verläuft, und dass zumindest die Seitenwand, die jeweils die zumindest eine Erhöhung aufweist, aus einem Kunststoffmaterial besteht, das ein Fluoreszenzmaterial enthält und derart lichtleitend und lichtdurchlässig ist, das Licht in die Seitenwände einleitbar und weiterleitbar ist und an der jeweiligen Austrittgrenzfläche wieder austretbar ist, wobei bei der Weiterleitung eine Umwandlung von unsichtbarem UV-Licht in sichtbares Licht erfolgt

8. Gepäckstück nach einem der Ansprüche 1 bis 6, **dadurch gekennzeichnet, dass** Fluoreszenzfarbstoff zu 0,3 -5 %, vorzugsweise zu 0,5-1,5% in dem Kunststoffmaterial enthalten ist.

9. Gepäckstück nach einem der Ansprüche 1 bis 6, **dadurch gekennzeichnet, dass** das Fluoreszenzmaterial aus der Gruppe der Naphthalimide und Thioindigo sein kann.

10. Gepäckstück nach einem der Ansprüche 1 bis 6, **dadurch gekennzeichnet, dass** die Seitenwände jeweils eine Dicke zwischen 0,4 - 10 mm, vorzugsweise 0,8-1,8 mm aufweisen.

11. Gepäckstück nach einem der Ansprüche 1 bis 6, **dadurch gekennzeichnet, dass** Kunststoffmaterial Polycarbonat, vorzugsweise transparentes Polycarbonat aufweist.

## Claims

1. An item of luggage, in particular a suitcase, comprising
at least six side walls, wherein each side wall has at least one outer surface and one inner surface, wherein the outer and the inner surface are substantially parallel to each other,
**characterized in that**
at least at one of the side walls at least one elevation is provided on the associated outer surface, which elevation comprises at least one exit surface that is at least partially not parallel to the outer surface of the respective side wall, and at least the side wall which comprises the at least one elevation is made from a plastic material that contains a fluorescent material and is light-conducting and light-transmissive such that light is adapted to be introduced into the respective side wall and transmitted and exit at the respective at least one exit surface, wherein a conversion of invisible UV light into visible light takes place in the respective side wall.

2. The item of luggage according to claim 1, **characterized in that** the exit surface of the elevation has a surface roughness that is higher than the surface roughness of the outer surface on which the elevation is arranged.

3. The item of luggage according to claim 1 or 2, **characterized in that** at least a portion of the exit boundary surface has an angle ranging between 80 and 170° with respect to the outer surface.

4. The item of luggage according to any one of claims 1 to 3, **characterized in that** the at least one elevation is a rib-shaped elevation.

5. The item of luggage according to claim 4, **characterized in that** the elevation, in particular the rib-shaped elevation, has a round, a triangular or a rectangular cross-section.

6. The item of luggage according to any one of claims 1 to 5, **characterized in that** a plurality of elevations forming a pattern are arranged side by side on the outer surface of the at least one side wall.

7. The item of luggage according to any one of claims 1 to 6, **characterized in that** at least two, preferably all side walls comprise at least one elevation at least on the associated outer surface, which elevation respectively comprises at least one exit boundary surface that at least partially is not parallel to the outer surface of the respective side wall, and that at least the side wall which respectively comprises the at least one elevation is made from a plastic material which contains a fluorescent material and is light-conducting and light-transmissive such that light is adapted to be introduced into the side walls and transmitted and exit at the respective exit boundary surface, wherein a conversion of invisible UV light into visible light takes place during the transmission.

8. The item of luggage according to any one of claims 1 to 6, **characterized in that** the fluorescent dye is contained in the plastic material to an amount of 0.3-5 %, preferably 0.5-1.5 %.

9. The item of luggage according to any one of claims 1 to 6, **characterized in that** the fluorescent material can be from the group of naphthalimides and thioindigo.

10. The item of luggage according to any one of claims 1 to 6, **characterized in that** the side walls each have a thickness ranging between 0,4-10 mm, preferably 0.8-1.8 mm.

11. The item of luggage according to any one of claims 1 to 6, **characterized in that** the plastic material comprises polycarbonate, preferably transparent polycarbonate.

## Revendications

1. Bagage, en particulier valise, doté d'au moins six parois latérales, dans lequel les parois latérales comportent respectivement une face interne et une face externe, dans lequel les faces externes et internes sont sensiblement parallèles les unes aux autres,
**caractérisé en ce que**
sur au moins une des parois latérales, au moins un rehaussement est prévu sur la face externe associée, lequel comporte au moins une surface de sortie qui est au moins partiellement non parallèle à la face externe de la paroi latérale respective, et **en ce qu'**au moins la paroi latérale comportant l'au moins un rehaussement est constituée d'une matière plastique contenant une matière fluorescente et étant optiquement conductrice et translucide de telle sorte que la lumière peut pénétrer dans la paroi latérale respective, être transmise et ressortir par l'au moins une surface de sortie respective, dans lequel une conversion de la lumière UV invisible en lumière visible s'effectue dans la paroi latérale respective.

2. Bagage selon la revendication 1, **caractérisé en ce que** la surface de sortie du rehaussement comporte une rugosité de surface supérieure à la rugosité de surface de la face externe sur laquelle est disposé le rehaussement.

3. Bagage selon la revendication 1 ou 2, **caractérisé en ce qu'**au moins une partie de la couche limite de sortie comporte par rapport à la face externe un angle entre 80 et 170°.

4. Bagage selon l'une des revendications 1 à 3, **caractérisé en ce que** l'au moins un rehaussement est un rehaussement en forme de nervure.

5. Bagage selon la revendication 4, **caractérisé en ce que** le rehaussement, en particulier le rehaussement en forme de nervure comporte une section transversale ronde, à trois côtés ou à quatre côtés.

6. Bagage selon l'une des revendications 1 à 5, **caractérisé en ce que** plusieurs rehaussements formant un motif sont disposés l'un à côté de l'autre sur une face externe de l'au moins une paroi latérale.

7. Bagage selon l'une des revendications 1 à 6, **caractérisé en ce qu'**au moins deux des parois latérales, de préférence toutes, comportent au moins un rehaussement au moins sur la face externe associée, lequel comporte au moins une couche limite de sortie qui est au moins partiellement non parallèle à la face externe de la paroi latérale respective, et **en ce qu'**au moins la paroi latérale comportant respectivement l'au moins un rehaussement est constituée d'une matière plastique contenant une matière fluorescente et étant optiquement conductrice et translucide de telle sorte que la lumière peut pénétrer dans les parois latérales, être transmise et ressortir par l'au moins une surface de sortie respective, dans lequel une conversion de la lumière UV invisible en lumière visible s'effectue lors de la transmission.

8. Bagage selon l'une des revendications 1 à 6, **caractérisé en ce que** du pigment ou du colorant fluorescent est contenu dans la matière plastique à raison de 0,3-5 %, de préférence 0,5-1,5 %.

9. Bagage selon l'une des revendications 1 à 6, **caractérisé en ce que** la matière fluorescente peut être issue du groupe des naphtalimides et des thioindigos.

10. Bagage selon l'une des revendications 1 à 6, **caractérisé en ce que** les parois latérales comportent respectivement une épaisseur entre 0,4 et 10 mm, de préférence entre 0,8 et 1,8 mm.

11. Bagage selon l'une des revendications 1 à 6, **caractérisé en ce que** la matière plastique comporte du polycarbonate, de préférence du polycarbonate transparent.
